# EUROPEAN PATENT APPLICATION

(11) **EP 4 443 224 A1**
(43) Date of publication of application: **09.10.2024**
(21) Application number: 22941502.1
(22) Date of filing: 05.12.2022
(51) Int. Cl.: G02F 1/13357

(54) **BACKLIGHT MODULE AND DISPLAY APPARATUS**

(30) Priority: 12.05.2022 CN 202210533173
(71) Applicant: Chongqing HKC Optoelectronics Technology Co., Ltd., Chongqing 401320 (CN); HKC Corporation Limited, Shenzhen, Guangdong 518108 (CN)
(72) Inventor: WAN, Ye, Chongqing 401320 (CN); ZHENG, Haoxuan, Chongqing 401320 (CN)
(74) Representative: Cabinet Netter
(86) International application number: PCT/CN2022/136559
(87) International publication number: WO 2023/216567

(57) **Abstract**

The present application relates to a backlight module and a display apparatus. The backlight module (1) includes a backplane (11) and a reflector plate (12) arranged on the backplane (11). The backlight module (1) further includes a brightness enhancement film (13), a magneto-optic dielectric film (14), and a magnetic element (15); the magnetic element (15) is located between the backplane (11) and the reflector plate (12); the magneto-optic dielectric film (14) is located between the magnetic element (15) and the brightness enhancement film (13); the brightness enhancement film (13) is used for allowing linearly polarized light in a first direction to pass and reflecting linearly polarized light in a second direction; the magnetic element is used for generating a magnetic field parallel to the first direction (X), so that the linearly polarized light in the second direction (Y) is caused to rotate in a polarization direction of the light after passing through the magneto-optic dielectric film (14) located in the magnetic field; the reflector plate (12) is used for reflecting the rotated linearly polarized light; the first direction (X) is a light exiting direction of the backlight module (1); and the second direction (Y) is perpendicular to the first direction (X). The backlight module can greatly improve the efficiency of polarized light passing through the brightness enhancement film (13), reduce waste caused by the fact that the light is absorbed by various layers of films, and improve the backlight utilization rate.

## Description

### CROSS-REFERENCE TO RELATED APPLICATIONS

The present application claims priority to Chinese Patent Application No. 202210533173.4 filed on May 12, 2022, and entitled "Backlight Module and Display Apparatus", the entire content of which is incorporated herein by reference.

### TECHNICAL FIELD

The present application relates to the technical field of displaying, in particular to a background module and a display apparatus.

### BACKGROUND

A display apparatus usually includes a Liquid Crystal Display (LCD) and a backlight module. The backlight module is arranged on a backlight side of the LCD to supply a light source to the LCD to cause the LCD to display images.

A backlight penetration rate of the LCD is often only about 5%. If a contrast increases, the penetration rate is often lower, so brighter backlight is needed. At present, Dual Brightness Enhancement Films (DBEFs) are used in the LCD, to allow a component, in the same direction as a transmission axis of a lower polarizer of the LCD, of natural light emitted by the backlight module to pass, while a vertical component returns backlight. After multiple reflections and refractions, returned light energy becomes natural light again, and some of the natural light can pass through the DBEFs, thereby achieving recycling of this part of energy. However, only when polarized light reflected by the DBEFs undergoes multiple reflections and refractions, some energy can turn to a target polarization direction. During this period, the energy is repeatedly absorbed by various layers of films, resulting in more waste and limiting the ability of the DBEFs to improve a backlight utilization rate.

### SUMMARY

The present application aims to provide a backlight module and a display apparatus, which can greatly improve the efficiency of polarized light passing through a brightness enhancement film, reduce waste caused by the fact that the light is absorbed by various layers of films, and improve the backlight utilization rate.

In a first aspect, an embodiment of the present application provides a backlight module, including a backplane and a reflector plate arranged on the backplane; the backlight module further includes a brightness enhancement film, a magneto-optic dielectric film, and a magnetic element; the magnetic element is located between the backplane and the reflector plate; the magneto-optic dielectric film is located between the magnetic element and the brightness enhancement film; the brightness enhancement film is used for allowing linearly polarized light in a first direction to pass and reflecting linearly polarized light in a second direction; the magnetic element is used for generating a magnetic field parallel to the first direction, so that the linearly polarized light in the second direction is caused to rotate in a polarization direction of the light after passing through the magneto-optic dielectric film located in the magnetic field; the reflector plate is used for reflecting the rotated linearly polarized light; the first direction is a light exiting direction of the backlight module; and the second direction is perpendicular to the first direction.

In a second aspect, an embodiment of the present application further provides a display apparatus, including a liquid crystal display; and the above-mentioned backlight module, arranged on one side of a backlight surface of the liquid crystal display. The backlight module is used for supplying a light source to the liquid crystal display.

According to the backlight module and the display apparatus provided by the embodiments of the present application, the magnetic element is arranged between the backplane and the reflector plate in the backlight module, and the magneto-optic dielectric film is arranged between the magnetic element and the brightness enhancement film, so that the brightness enhancement film can allow the linearly polarized light in the first direction to pass and reflect the linearly polarized light in the second direction; the magnetic element can generate the magnetic field parallel to the first direction, and the linearly polarized light in the second direction is caused to rotate in the polarization direction of the light after passing through the magneto-optic dielectric film located in the magnetic field; and the reflector plate is used for reflecting the rotated linearly polarized light, thereby converting the vast majority of the linearly polarized light in the second direction, which is reflected by the brightness enhancement film, into the linearly polarized light in the first direction, which can pass through the brightness enhancement film. Therefore, the efficiency of the polarized light passing through the brightness enhancement film is greatly improved, waste caused by the fact that the light is absorbed by various layers of films is reduced, and the backlight utilization rate is improved.

### BRIEF DESCRIPTION OF THE DRAWINGS

The following will refer to the accompanying drawings to describe the features, advantages, and technical effects of the exemplary embodiments of the present application. In the drawings, the same parts use the same reference numerals. The accompanying drawings are not drawn to an actual scale and are only used to illustrate relative positional relationships. A layer thickness of certain parts is exaggerated for understanding, and the layer thickness in the accompanying drawings does not represent a proportional relationship of an actual layer thickness.
Fig. 1 shows a schematic structural diagram of a backlight module and a display apparatus including the backlight module according to a first embodiment of the present application;
Fig. 2 is a schematic diagram of a light path of a backlight module according to a first embodiment of the present application;
Fig. 3 shows a schematic structural diagram of a backlight module and a display apparatus including the backlight module according to a second embodiment of the present application;
Fig. 4 shows a schematic structural diagram of a backlight module and a display apparatus including the backlight module according to a third embodiment of the present application; and
Fig. 5 shows a schematic structural diagram of a backlight module and a display apparatus including the backlight module according to a fourth embodiment of the present application.

Numerals in the drawings:
1: backlight module; 10: optical control component; 101: shading portion; X: first direction; Y: second direction;
11: backplane; 12: reflector plate; 13: brightness enhancement film; 14: magneto-optic dielectric film;
15: magnetic element; 16: light source; 17: support column; 18: light guide plate; 19: support plate;
2: liquid crystal display; 21: lower polarizer; 22: array substrate; 23: color film substrate; and 24: upper polarizer.

### DETAILED DESCRIPTION

The following will provide a detailed description of the features and exemplary embodiments of various aspects of the present application. In the detailed description below, many specific details are proposed to provide a comprehensive understanding of the present application. However, it is evident to those skilled in the art that the present application can be implemented without the need for some of these specific details. The descriptions of the embodiments below are only intended to provide a better understanding of the present application by showing examples of the present application. In the accompanying drawings and the following description, at least some well-known structures and techniques are not shown in order to avoid unnecessary ambiguity to the present application. Moreover, for clarity, a size of a regional structure may have been exaggerated. In addition, the features, structures or characteristics described below may be combined in one or more embodiments in any proper manner.

Specific structures of backlight modules and display apparatuses including the backlight modules in the embodiments of the present application are separately described below in combination with the drawings.

### First embodiment

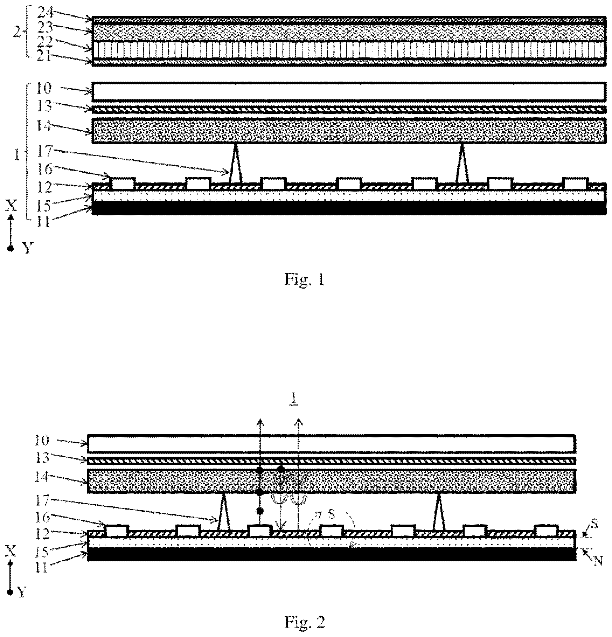

Fig. 1 shows a schematic structural diagram of a backlight module and a display apparatus according to a first embodiment of the present application, and Fig. 2 is a schematic diagram of a light path of a backlight module according to a first embodiment of the present application.

A liquid crystal display apparatus usually includes a liquid crystal display 2 and a backlight module 1. The liquid crystal display 2 is a non-emitting light receiving element, and the backlight module 1 is arranged on one side of a backlight surface of the liquid crystal display 2 to supply a light source to the liquid crystal display 2 to cause the liquid crystal display 2 to display images.

The liquid crystal display 2 may be a single display or two displays stacked in a thickness direction. When the liquid crystal display 2 includes two displays, the display located at a bottom layer is used for light control, and the display located at a top layer is used for displaying. In this way, a contrast of the display apparatus can be improved. For convenience of description, the embodiments of this application are described taking a single liquid crystal display 2 as an example.

The liquid crystal display 2 includes an array substrate 22, a color film substrate 23 opposite to the array substrate 22, and a liquid crystal layer arranged between the array substrate 22 and the color film substrate 23. The liquid crystal layer includes a plurality of liquid crystal molecules. The liquid crystal molecules are usually rod-shaped, which can flow like liquid while also possessing some crystal features. When the liquid crystal molecules are in an electric field, their arrangement direction will change as the electric field changes. The liquid crystal display 2 controls rotation of the liquid crystal molecules in the liquid crystal layer by applying a driving voltage to the array substrate 22 and the color film substrate 23, to refract light provided by the backlight module 1 and generate a picture.

In addition, the display apparatus further includes an upper polarizer 24 located on one side of a light exiting surface of the liquid crystal display 2, a lower polarizer 21 located on one side of a backlight surface of the liquid crystal display 2, and a cover plate (not shown) located on one side of the upper polarizer 24 facing away from the liquid crystal display 2. The lower polarizer 21 and the upper polarizer 24 can polarize incident light of the liquid crystal display 2 to allow transmission of light that vibrates in only one direction.

As shown in Fig. 1, the backlight module 1 provided in the first embodiment of the present application includes a backplane 11, a reflector plate 12 arranged on the backplane 11, a brightness enhancement film 13, a magneto-optic dielectric film 14, and a magnetic element 15.

The magnetic element 15 is located between the backplane 11 and the reflector plate 12. The magneto-optic dielectric film 14 is located between the magnetic element 15 and the brightness enhancement film 13. The brightness enhancement film 13 is used for allowing linearly polarized light in a first direction X to pass and reflecting linearly polarized light in a second direction Y The magnetic element 15 is used for generating a magnetic field parallel to the first direction X, so that the linearly polarized light in the second direction Y is caused to rotate in a polarization direction of the light after passing through the magneto-optic dielectric film 14 located in the magnetic field. The reflector plate 12 is used for reflecting the rotated linearly polarized light. The first direction X is a light exiting direction of the backlight module 1; and the second direction Y is perpendicular to the first direction X.

The backlight module 1 also includes a light source 16. The light source 16 emits natural light. The brightness enhancement film 13 has polarization, allowing only light components having a vibration direction and a transmission direction parallel to each other to pass. Therefore, light energy in the natural light that is in the same direction (namely, the first direction X) as a transmission axis of the lower polarizer 21 of the liquid crystal display 2 passes through the brightness enhancement film 13 and is displayed on the liquid crystal display 2, while light energy in the natural light that is perpendicular to the transmission axis of the lower polarizer 21 (namely, the second direction Y perpendicular to a paper surface) is reflected by the brightness enhancement film 13, so that a magneto-optic effect occurs when the linearly polarized light in the second direction Y passes through the magneto-optic dielectric film 14 in the magnetic field parallel to the first direction X and generated by the magnetic element 15. The magneto-optic effect is a Faraday rotation magneto-optic effect.

As shown in Fig. 2, the magnetic element 15 has an N pole and an S pole opposite to each other in its own thickness direction, and a magnetic field direction parallel to the first direction X can be generated between the N pole and the S pole. When the N pole is located on a lower surface of the magnetic element 15 and the S pole is located on an upper surface of the magnetic element 15, the magnetic field direction may be a bottom-top diamagnetic field direction. When the N pole is located on the upper surface of the magnetic element 15 and the S pole is located on the lower surface of the magnetic element 15, the magnetic field direction can be a top-down paramagnetic field direction.

According to the Faraday rotation magneto-optic effect, a polarization direction of the linearly polarized light in the second direction Y that does not pass through the brightness enhancement film 13 rotates after the light passes through the magneto-optic dielectric film 14 located in the magnetic field. As shown in Fig. 2, solid dots represent a vibration direction of linearly polarized light that is not transmitted, that is, the second direction Y perpendicular to the paper surface, and a hollow arrow represents a rotation direction of the linearly polarized light. Assuming that a rotation angle is θ1, the rotated linearly polarized light is reflected after reaching the reflector plate 12, and the reflected linearly polarized light again passes through the magneto-optic dielectric film 14 located in the magnetic field and then rotates at a rotation angle of θ2. Optionally, the reflector plate 12 may be either a mirror reflector plate or a diffuse reflector plate.

Due to the fact that the Faraday rotation magneto-optic effect is only related to a direction of magnetic induction intensity and is not related to paramagnetic or diamagnetic induction intensity of polarized light, it can be known according to the principle of reflection rotation in the same direction of the Faraday rotation magneto-optic effect that rotation angles θ2 and θ1 of the linearly polarized light in its polarization direction after twice passing through the magneto-optic dielectric film 14 located in the magnetic field are equal in size and continuous in direction. In this way, when the linearly polarized light that has rotated twice in the magnetic field reaches the brightness enhancement film 13, the polarization direction of the linearly polarized light rotates twice θ1 or twice θ2.

At this point, energy of the linearly polarized light is divided into two parts again: the light energy that is in the same direction (namely, the first direction X) as the transmission axis of the lower polarizer 21 passes through the brightness enhancement film 13 and is then displayed on the liquid crystal display 2, and the light energy that is perpendicular (namely, the second direction Y) to the transmission axis of the lower polarizer 21 is reflected again by the brightness enhancement film 13. After several reflections, the vast majority of the linearly polarized light in the second direction Y that is reflected back by the brightness enhancement film 13 can be converted into linearly polarized light that can pass through the brightness enhancement film 13 in the first direction X, which reduces waste caused by the fact that the light is absorbed by various layers of films and improves the backlight utilization rate.

According to the backlight module 1 and the display apparatus provided by the embodiments of the present application, the magnetic element 15 is arranged between the backplane 11 and the reflector plate 12 in the backlight module 1, and the magneto-optic dielectric film 14 is arranged between the magnetic element 15 and the brightness enhancement film 13, so that the brightness enhancement film 13 can allow the linearly polarized light in the first direction X to pass and reflect the linearly polarized light in the second direction Y. The magnetic element 15 can generate the magnetic field parallel to the first direction X, and the linearly polarized light in the second direction Y is caused to rotate in the polarization direction of the light after passing through the magneto-optic dielectric film 14 located in the magnetic field. The reflector plate 12 is used for reflecting the rotated linearly polarized light, thereby converting the vast majority of the linearly polarized light in the second direction Y, which is reflected back by the brightness enhancement film 13, into the linearly polarized light in the first direction X, which can pass through the brightness enhancement film 13. Therefore, the efficiency of polarized light passing through the brightness enhancement film 13 is greatly improved, waste caused by the fact that the light is absorbed by various layers of films is reduced, and the backlight utilization rate is improved.

In some embodiments, the linearly polarized light in the second direction Y is converted into the linearly polarized light in the first direction X after being reflected for N times between the brightness enhancement film 13 and the reflector plate 12, and N=π/(4 × B × V × L), where L is a thickness of the magneto-optic dielectric film 14; V is the Verdet constant of the magneto-optic dielectric film 14; and B is magnetic induction intensity of the magnetic field parallel to the first direction X and generated by the magnetic element 15.

Specifically, it can be known according to a working principle of the Faraday rotation magneto-optic effect that a single rotation angle obtained after the linearly polarized light passes through the magneto-optic dielectric film 14 is θ=V×B×L. Therefore, a rotation angle generated when the light reflected by the reflector plate 12 for N times reaches a lower surface of the brightness enhancement film 13 is 2×N×θ= 2×N×V×B×L.

If 2×N×V×B×L≈π/2, the linearly polarized light in the second direction Y, which is reflected back by the brightness enhancement film 13, is completely converted into the linearly polarized light in the first direction X and exits through the brightness enhancement film 13. At this time, N=π/(4×V×B×L). Reasonably setting a value of B and selecting the magneto-optic dielectric film 14 can effectively reduce the magnitude of N, to minimize the number of reflections as much as possible, thereby reducing the waste caused by the fact that the light is absorbed by various layers of films and improving the backlight utilization rate.

Ideally, in a case of N=1, the linearly polarized light in the second direction Y, which is reflected by the brightness enhancement film 13, is reflected once on the reflector plate 12, so that the polarization direction rotates π/2 to convert the linearly polarized light into the linearly polarized light in the first direction X, and the linearly polarized light is reused after passing through the brightness enhancement film 13 to maximize the backlight utilization rate.

In some embodiments, the magnetic element 15 is a planar magnet, and a material of the magnetic element 15 may include a neodymium iron boron magnet (NdFeB) to achieve high magnetic induction intensity.

Optionally, at least part of the backplane 11 is a magnetic shielding material. The magnetic shielding material may include, for example, iron aluminum alloy, and is made by stamping and other processes, to prevent external metal impurities from interfering with the magnetic field generated by the magnetic element 15, affecting the conversion efficiency of the linearly polarized light, and reducing the backlight utilization rate. The magnetic shielding material may also protect the backlight module 1 from being easily broken under the impact of an external force. The portion of the backplane 11 that does not use the magnetic shielding material may be made of a plastic material, such as polyimide, polycarbonate, polyethersulfone, polyethylene terephthalate, and polyethylene. This portion may be used to bond the magnetic element with other magnetic stickers.

In addition, a shape of the backplane 11 may be the same as a shape of the liquid crystal display 2 using the backlight module 1. For example, if the liquid crystal display 2 is circular, the backplane 11 of the backlight module 1 used by the liquid crystal display is also circular. The shape of the backplane 11 can vary in different embodiments.

In some embodiments, the magneto-optic dielectric film 14 includes a transparent substrate and a magneto-optic substance arranged on a surface of the transparent substrate. A material of the transparent substrate includes any one of polymethyl methacrylate (PMMA), polyethylene terephthalate (PET), polycarbonate (PC), and glass. The magneto-optic substance includes any one of yttrium iron garnet ferrite (YIG), yttrium iron garnet ferrite (YIG) doped with graphene aerogel (GA), and a CdMgTe crystal.

In some embodiments, the magneto-optic dielectric film 14 includes a transparent substrate and a plurality of layers of magneto-optic substances arranged in the transparent substrate. A material of the transparent substrate includes any one of polymethyl methacrylate (PMMA), polyethylene terephthalate (PET), polycarbonate (PC), and glass. The magneto-optic substances include any one of yttrium iron garnet ferrite (YIG), yttrium iron garnet ferrite (YIG) doped with graphene aerogel (GA), and a CdMgTe crystal. The plurality of layers of magneto-optic substances are arranged in layers in the transparent substrate.

In some embodiments, the brightness enhancement film 13 includes a core layer and a coating layer. The coating layer can be obtained by mixing diffused particles with glue, and the coating layer is uniformly applied to the core layer and is then dried to obtain the brightness enhancement film 13.

In some embodiments, the light source 16 is arranged on one side of the magnetic element 15 facing away from the backplane 11. The light source 16 is a lamp panel. The lamp panel includes a circuit board and a plurality of light-emitting elements arrayed on the circuit board. The reflector plate 12 is provided with open slots H corresponding to the light-emitting elements. The magneto-optic dielectric film 14 is located on one side of the reflector plate 12 facing away from the magnetic element 15, and a support column 17 is arranged between the reflector plate 12 and the magneto-optic dielectric film 14.

In some embodiments, each of the light-emitting elements may be either a Micro light-emitting diode (Micro-LED) or a submillimeter LED (Mini-LED). The Micro-LED refers to an LED chip with a grain size smaller than 100 microns, while the Mini-LED refers to an LED chip with a grain size of about 100-300 microns. In other embodiments, each of the light-emitting elements may also be a conventional-sized LED, and the LED, the Mini-LED, or the Micro-LED may be displayed as a self-luminous light-emitting element, with the advantages of low power consumption, high brightness, high resolution, high color saturation, fast response, long lifespan, high efficiency, and the like.

As shown in Fig. 1, the backlight module 1 is a straight-down backlight module. The backlight module 1 further includes an optical control component 10. The optical control component 10 is located on sides of the light-emitting elements away from the backplane 11. An orthographic projection of the optical control component 10 on the backplane 11 covers an orthographic projection of the plurality of light-emitting elements on the backplane 11.

The magneto-optic dielectric film 14 is used for supporting the brightness enhancement film 13 and other optical control components 10. The optical control component 10 is an entire optical film layer integrating optical processing functions such as reflection, refraction, scattering, and convergence and obtained by being processed on the basis of the brightness enhancement film 13. The optical control component may include a diffusion plate and an optical film located on one side of the diffusion plate facing away from the backplane 11. The diffusion plate and the optical film are fixedly connected by a transparent optical adhesive, to prevent a relative displacement between the diffusion plate and the optical film from affecting the light exiting effect of the backlight module 1.

The diffusion plate is used for diffusing light emitted by the light-emitting elements to balance the brightness of the entire backlight module 1. The optical film may include, for example, a prism lens and a protection plate. The prism lens is used for controlling a propagation direction of light diffused by the diffusion plate, so that the propagation direction of the light is perpendicular to the liquid crystal display 2. The protection plate is used for protecting a prism of the prism lens against scratches and the like. The protection plate may also be used for widening an angle of view that has been narrowed due to the prism lens.

The reflector plate 12 is provided with the open slots corresponding to the light-emitting elements, and the open slots can prevent the reflector plate 12 from blocking the light emitted by the light-emitting elements. Optionally, the reflector plate 12 may be prepared from a plastic material, for example, the PET, the PC, and the PS. The reflector plate 12 may further include a high-reflection coating applied to the plastic material, such as titanium dioxide (TiO₂), to increase a light reflection coefficient. The reflector plate 12 may reflect the light reflected from the optical control component 10 to the backplane 11 to the optical control component 10 again, thereby improving the light exiting efficiency of the backlight module 1 and ultimately improving the backlight brightness of the backlight module 1.

Further, the support column 17 is an elastic column that may extend and retract in its own axial direction. One end of the support column 17 in its own axial direction is connected to the reflector plate 12, and the other end abuts against the magneto-optic dielectric film 14.

Optionally, the support column 17 is an elastic thimble internally provided with a spring, and may extend and retract with changes in a light mixing distance. There are a plurality of support columns 17. Ends of the plurality of support columns 17 away from the reflector plate 12 respectively abut against the magneto-optic dielectric film 14 to prevent a middle position of the optical control component 10 from being recessed inwards due to its own gravity and affecting the light exiting effect. The backlight module 1 with the plurality of support columns 17 is particularly suitable for display apparatuses with larger sizes, such as 67 inches or larger.

Since the support columns 17 are arranged in an optical cavity of the backlight module 1, they will absorb the light emitted by the light-emitting elements and affect the optical taste. The support columns 17 are arranged between the reflector plate 12 and the magneto-optic dielectric film 14, which may extrude and even damage the reflector plate 12. In addition, if the support columns 17 fall off during use, they will remain in the optical cavity and cause abnormal noise. This will affect the optical display effect. Therefore, in display apparatuses of 32 inches or a smaller size, the support columns 17 may usually be omitted.

### Second embodiment

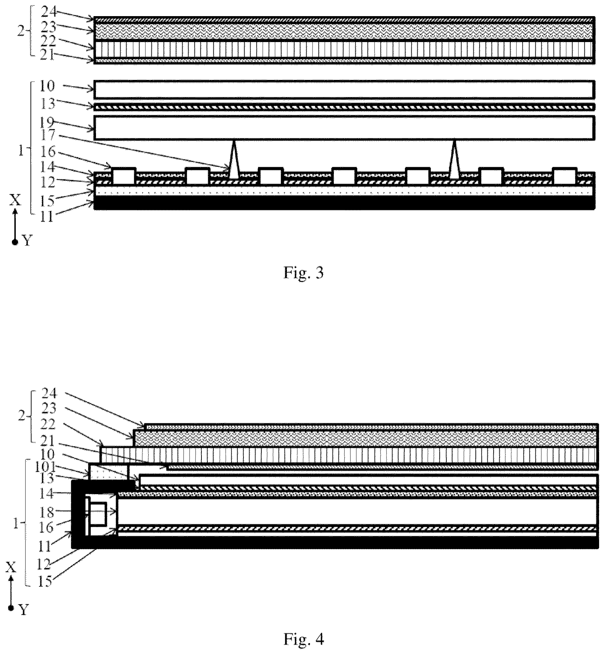

Fig. 3 shows a schematic structural diagram of a backlight module and a display apparatus including the backlight module according to a second embodiment of the present application.

As shown in Fig. 3, the second embodiment of the present application further provides a backlight module 1 and a display apparatus including the backlight module 1. The structure of the backlight module 1 is similar to that of the backlight module 1 in the first embodiment and as shown in Fig. 1, except that the magneto-optic dielectric film 14 of the straight-down backlight module 1 is closer to the magnetic element 15, so that the magnetic induction intensity is higher, and the uniformity of the magnetic field is better.

It can be known according to the rotation angle θ=V×B×L of the Faraday rotation magneto-optic effect that when the magnetic induction intensity is higher, a single rotation angle obtained after the linearly polarized light passes through the magneto-optic dielectric film 14 can be increased, so that the number of reflections of the linearly polarized light by the brightness enhancement film 13 and the reflector plate 12 can be reduced, thereby reducing the waste caused by the fact that the light is absorbed by various layers of films and improving the backlight utilization rate.

Specifically, the backlight module 1 further includes a light source 16 and a support plate 19. The light source 16 is arranged on one side of the magnetic element 15 facing away from the backplane 11. The light source 16 is a lamp panel. The lamp panel includes a circuit board and a plurality of light-emitting elements arrayed on the circuit board. The magneto-optic dielectric film 14 is located on one side of the reflector plate 12 facing away from the magnetic element 15, and the magneto-optic dielectric film 14 is attached to the reflector plate 12. The support plate 19 is arranged between the magneto-optic dielectric film 14 and the brightness enhancement film 13. The magneto-optic dielectric film 14 is flush with top surfaces of the light-emitting elements and is provided with open slots corresponding to the light-emitting elements. A support column 17 is arranged between the reflector plate 12 and the support plate 19.

In some embodiments, each of the light-emitting elements may be either a Micro light-emitting diode (Micro-LED) or a submillimeter LED (Mini-LED). The Micro-LED refers to an LED chip with a grain size smaller than 100 microns, while the Mini-LED refers to an LED chip with a grain size of about 100-300 microns. In other embodiments, each of the light-emitting elements may also be a conventional-sized LED, and the LED, the Mini-LED, or the Micro-LED may be displayed as a self-luminous light-emitting element, with the advantages of low power consumption, high brightness, high resolution, high color saturation, fast response, long lifespan, high efficiency, and the like.

In one example, each of the light-emitting elements is a Mini-LED or a Micro-LED, and the magneto-optic dielectric film 14 can be flush with the top surfaces of the Mini-LEDs and is provided with open slots corresponding to the light-emitting elements, so that an entire surface of the magneto-optic dielectric film 14 covers the Mini-LEDs, thereby reducing a size of the backlight module 1 in a thickness direction.

In another example, each of the light-emitting elements is a Mini-LED or Micro-LED. The lamp panel further includes a transparent sealing layer covering the plurality of light-emitting elements. The magneto-optic dielectric film 14 includes a magneto-optic substance doped in the transparent sealing layer, thereby omitting the individual transparent substrate of the magneto-optic dielectric film 14, which further reduces the size of the backlight module 1 in the thickness direction and achieving a more compact layout effect.

The support plate 19 may be an optical diffuser, which is used for diffusing the light emitted by the light-emitting elements on the one hand to balance the brightness of the entire backlight module 1, and can also be used for supporting the brightness enhancement film 13 and the optical control component 10.

The reflector plate 12 and the magneto-optic dielectric film 14 are attached to each other, and are closer to the magnetic element 15. The reflector plate 12 and the magneto-optic dielectric film 14 are respectively provided with open slots corresponding to the light-emitting elements. The open slots can prevent the reflector plate 12 and the magneto-optic dielectric film 14 from blocking the light emitted by the light-emitting elements.

Further, the support column 17 is an elastic column that may extend and retract in its own axial direction. One end of the support column 17 in its own axial direction is connected to the reflector plate 12, and the other end abuts against the support plate 19.

Optionally, the support column 17 is an elastic thimble internally provided with a spring, and may extend and retract with changes in a mixing distance. There are a plurality of support columns 17. Ends of the plurality of support columns 17 away from the reflector plate 12 respectively abut against the support plate 19 to prevent middle positions of the support plate 19 and the optical control component 10 from being recessed inwards due to its own gravity and affecting the light exiting effect. The backlight module 1 with the plurality of support columns 17 is particularly suitable for display apparatuses with larger sizes, such as 67 inches or larger.

Since the support columns 17 are arranged in an optical cavity of the backlight module 1, they will absorb the light emitted by the light-emitting elements and affect the optical taste. The support columns 17 are arranged between the reflector plate 12 and the support plate 19, which may extrude and even damage the reflector plate 12. In addition, if the support columns 17 fall off during use, they will remain in the optical cavity and cause abnormal noise. This will affect the optical display effect. Therefore, in display apparatuses of 32 inches or a smaller size, the support columns 17 may usually be omitted.

According to the straight-down backlight module in the embodiment, since the magneto-optic dielectric film 14 is closer to the magnetic element 15, the magnetic induction intensity of the magnetic field generated by the magnetic element 15 and parallel to the first direction X is higher, and the uniformity of the magnetic field is better. The single rotation angle of the linearly polarized light in the magnetic field can be increased, and the number of reflections of the linearly polarized light by the brightness enhancement film 13 and the reflector plate 12 can be reduced, thereby reducing the waste caused by the fact that the light is absorbed by various layers of films, which further improves the efficiency of the polarized light passing through the brightness enhancement film 13, reduces the waste caused by the fact that the light is absorbed by various layers of films, and improves the backlight utilization rate.

### Third embodiment

Fig. 4 shows a schematic structural diagram of a backlight module and a display apparatus including the backlight module according to a third embodiment of the present application.

As shown in Fig. 4, the third embodiment of the present application further provides a backlight module 1 and a display apparatus including the backlight module 1. The structure of the backlight module 1 is similar to that of the backlight module 1 in the first embodiment and as shown in Fig. 1, except that the backlight module 1 is a side-entry backlight module, that is, a light source 16 is arranged on a light entering side of a light guide plate 18. At this point, a thickness of the magneto-optic dielectric film 14 can be reduced. Since the magneto-optic dielectric film is closer to the magnetic element 15, the magnetic induction intensity is higher, and the uniformity of the magnetic field is better.

It can be known according to the rotation angle θ=V×B×L of the Faraday rotation magneto-optic effect that when the magnetic induction intensity is higher, a single rotation angle obtained after the linearly polarized light passes through the magneto-optic dielectric film 14 can be increased, so that the number of reflections of the linearly polarized light by the brightness enhancement film 13 and the reflector plate 12 can be reduced, thereby reducing the waste caused by the fact that the light is absorbed by various layers of films and improving the backlight utilization rate. In addition, compared to the straight-down backlight module, the side-entry backlight module is thinner.

Specifically, the backlight module 1 includes a light source 16 and a light guide plate 18. The light source 16 is a light strip, and the light guide plate 18 is arranged between the reflector plate 12 and the magneto-optic dielectric film 14. The light strip is arranged on one side of the light guide plate 18. The light strip generally includes a plurality of light-emitting elements arranged in rows. The light-emitting elements may be conventional-sized LEDs.

Optionally, a material of the light guide plate 18 may be a PMMA material with high transmittance, a polymethacrylstyrene (MS) material with excellent heat resistance and moisture resistance, light guide artificial resin, and the like. Light emitted from the light source 16 enters a main body portion from the light entering side of the light guide plate 18, and then exits from one side of a light exiting surface of the main body portion to the liquid crystal display 2, thereby converting a point light source or line light source generated by the light source 16 into a surface light source, so that an entire area of the liquid crystal display 2 is illuminated with basically consistent brightness.

In addition, the backlight module 1 further includes a magneto-optic dielectric film 14, a brightness enhancement film 13, and an optical control component 10 arranged on the light guide plate 18.

In some embodiments, the magneto-optic dielectric film 14 includes a transparent substrate and a magneto-optic substance arranged on a surface of the transparent substrate. A material of the transparent substrate includes any one of polymethyl methacrylate (PMMA), polyethylene terephthalate (PET), polycarbonate (PC), and glass. The magneto-optic substance includes any one of yttrium iron garnet ferrite (YIG), yttrium iron garnet ferrite (YIG) doped with graphene aerogel (GA), and a CdMgTe crystal.

In some embodiments, the magneto-optic dielectric film 14 includes a transparent substrate and a plurality of layers of magneto-optic substances arranged in the transparent substrate. A material of the transparent substrate includes any one of polymethyl methacrylate (PMMA), polyethylene terephthalate (PET), polycarbonate (PC), and glass. The magneto-optic substances include any one of yttrium iron garnet ferrite (YIG), yttrium iron garnet ferrite (YIG) doped with graphene aerogel (GA), and a CdMgTe crystal. The plurality of layers of magneto-optic substances are arranged in layers in the transparent substrate.

In some embodiments, the brightness enhancement film 13 includes a core layer and a coating layer. The coating layer can be obtained by mixing diffused particles with glue, and the coating layer is uniformly applied to the core layer and is then dried to obtain the brightness enhancement film 13.

In some embodiments, the backplane 11 includes a bottom plate and a bending portion, and a U-shaped accommodating cavity is formed between the bottom plate and the bending portion. Part of the light strip and part of the light guide plate 18 are located in the U-shaped accommodating cavity. The bending portion includes a first support surface and a second support surface intersecting with each other. The light strip is located on the first support surface; and the second support surface is parallel to the bottom plate.

Further, a shading portion 101 is arranged between the second support surface of the backplane 11 and the array substrate 22 of the liquid crystal display 2. The shading portion 101 is generally black and may be formed by adding a black color masterbatch to plastic, or the shading portion 101 is a black adhesive layer, or the like, to prevent the situation that light of the light strip leaks out from a gap between the light guide plate 18 and the backplane 11, resulting in light leakage from an edge.

The optical control component 10 may include a lower diffusion film, a lower brightness enhancement film, an upper brightness enhancement film, and an upper diffusion film stacked from bottom to top. At least one of the lower brightness enhancement film and the upper brightness enhancement film is provided with a prism structure on a light exiting surface, so that light from by the light guide plate 18 achieves a gathering effect, and the brightness of the backlight module 1 within a specific angle of view range can be improved.

According to the side-entry backlight module in the embodiment, since the magneto-optic dielectric film 14 is closer to the magnetic element 15, the magnetic induction intensity of the magnetic field generated by the magnetic element 15 and parallel to a light exiting direction is higher, and the uniformity of the magnetic field is better. The single rotation angle of the linearly polarized light in the magnetic field can be increased, and the number of reflections of the linearly polarized light by the brightness enhancement film 13 and the reflector plate 12 can be reduced, thereby reducing the waste caused by the fact that the light is absorbed by various layers of films, which further improves the efficiency of the polarized light passing through the brightness enhancement film 13, reduces the waste caused by the fact that the light is absorbed by various layers of films, and improves the backlight utilization rate. In addition, the thickness of the magneto-optical dielectric film 14 can be reduced, so that compared to the straight-down backlight module, the side-entry backlight module is thinner.

### Fourth embodiment

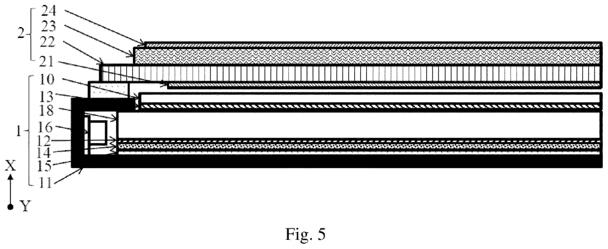

Fig. 5 shows a schematic structural diagram of a backlight module and a display apparatus according to a fourth embodiment of the present application.

As shown in Fig. 5, the fourth embodiment of the present application further provides a backlight module 1 and a display apparatus including the backlight module 1. The structure of the backlight module is similar to that of the backlight module 1 in the third embodiment and as shown in Fig. 3, except that the magneto-optic dielectric film 14 of the side-entry backlight module is arranged at a different position. Compared to the backlight module 1 in the third embodiment and as shown in Fig. 3, the backlight module is higher in magnetic induction intensity because the magneto-optic dielectric film 14 is closer to the magnetic element 15, and the uniformity of the magnetic field is better.

It can be known according to the rotation angle θ=V×B×L of the Faraday rotation magneto-optic effect that when the magnetic induction intensity is higher, a single rotation angle obtained after the linearly polarized light passes through the magneto-optic dielectric film 14 can be increased, so that the number of reflections of the linearly polarized light by the brightness enhancement film 13 and the reflector plate 12 can be reduced, thereby reducing the waste caused by the fact that the light is absorbed by various layers of films and improving the backlight utilization rate.

Specifically, a light source 16 is a light strip. A light guide plate 18 is arranged between the reflector plate 12 and the brightness enhancement film 13. The light strip is arranged on a light entering side of the light guide plate 18, and the magneto-optic dielectric film 14 is located between the magnetic element 15 and the reflector plate 12. The light strip generally includes a plurality of light-emitting elements arranged in rows. The light-emitting elements may be conventional-sized LEDs.

Optionally, a material of the light guide plate 18 may be a PMMA material with high transmittance, a polymethacrylstyrene material with excellent heat resistance and moisture resistance, light guide artificial resin, and the like. Light emitted from the light source 16 enters a main body portion from the light entering side of the light guide plate 18, and then exits from one side of a light exiting surface of the main body portion to the liquid crystal display 2, thereby converting a point light source or line light source generated by the light source 16 into a surface light source, so that an entire area of the liquid crystal display 2 is illuminated with basically consistent brightness.

In some embodiments, a backplane 11 includes a bottom plate and a bending portion, and a U-shaped accommodating cavity is formed between the bottom plate and the bending portion. Part of the light strip and part of the light guide plate 18 are located in the U-shaped accommodating cavity. The bending portion includes a first support surface and a second support surface intersecting each other. The light strip is located on the first support surface; and the second support surface is parallel to the bottom plate.

Further, a shading portion 101 is arranged between the second support surface of the backplane 11 and the array substrate 22 of the liquid crystal display 2. The shading portion 101 is generally black and may be formed by adding a black color masterbatch to plastic, or the shading portion 101 is a black adhesive layer, or the like, to prevent the situation that light of the light strip leaks out from a gap between the light guide plate 18 and the backplane 11, resulting in light leakage from an edge.

According to the side-entry backlight module in the embodiment, since the magneto-optic dielectric film 14 is closer to the magnetic element 15, the magnetic induction intensity of the magnetic field generated by the magnetic element 15 and parallel to a light exiting direction is higher, and the uniformity of the magnetic field is better. Thus, the single rotation angle of the linearly polarized light in the magnetic field can be increased, and the number of reflections of the linearly polarized light by the brightness enhancement film 13 and the reflector plate 12 can be reduced, thereby reducing the waste caused by the fact that the light is absorbed by various layers of films, which further improves the efficiency of the polarized light passing through the brightness enhancement film 13, reduces the waste caused by the fact that the light is absorbed by various layers of films, and improves the backlight utilization rate. In addition, the thickness of the magneto-optical dielectric film 14 can be reduced, so that compared to the straight-down backlight module, the side-entry backlight module is thinner.

It can be understood that the technical solutions of the backlight modules 1 provided in the embodiments of the present application can be widely used to provide light sources to various liquid crystal displays, such as a Twisted Nematic (TN) display, an In-Plane Switching (IPS) display, a Vertical Alignment (VA) display, and a Multi-Domain Vertical Alignment (MVA) display.

It should be easily understood that the terms "on", "over", and "above" in the present application should be interpreted in the widest possible way, so that "on" not only means "directly on something", but also includes "on something" with intermediate features or layers between them, and "over" or "above" not only means "over" or "above", but also can mean "over" or "above" without intermediate features or layers between them (namely, directly on something).

The term "layer" used herein can refer to a material portion that includes a region with a certain thickness. A layer can extend over an entire lower or upper structure, or can have a smaller range than the lower or upper structure. In addition, a layer can be a region of a homogeneous or non-homogeneous continuous structure, and has a thickness less than that of the continuous structure. For example, a layer can be located between a top surface and a bottom surface of the continuous structure, or between any paired transverse planes at the top and bottom surfaces. A layer can extend horizontally, vertically, and/or along a conical surface. A substrate can be a layer, which can include one or more layers, and/or can have one or more layers located on, above, and/or below it. A layer can include a plurality of layers. For example, an interconnected layer may include one or more conductors and contact layers (provided with contacts, interconnection lines, and/or vias within them), as well as one or more dielectric layers.

It should be finally noted that the above embodiments are only used to describe the technical solutions of the present application, and not intended to limit the present application. Although the present application has been described in detail with reference to the foregoing embodiments, those ordinarily skilled in the art should understand that they can still modify the technical solutions described in all the foregoing embodiments, or equivalently replace some or all of the technical features, and these modifications or replacements do not depart from the essence of the corresponding technical solutions from the spirit and scope of the technical solutions of all the embodiments of the present application.

## Claims

1. A backlight module, comprising a backplane and a reflector plate arranged on the backplane, wherein the backlight module further comprises a brightness enhancement film, a magneto-optic dielectric film, and a magnetic element; the magnetic element is located between the backplane and the reflector plate; the magneto-optic dielectric film is located between the magnetic element and the brightness enhancement film; the brightness enhancement film is used for allowing linearly polarized light in a first direction to pass and reflecting linearly polarized light in a second direction; the magnetic element is used for generating a magnetic field parallel to the first direction, so that the linearly polarized light in the second direction is caused to rotate in a polarization direction of the light after passing through the magneto-optic dielectric film located in the magnetic field; the reflector plate is used for reflecting the rotated linearly polarized light; the first direction is a light exiting direction of the backlight module; and the second direction is perpendicular to the first direction.

2. The backlight module according to claim 1, wherein the linearly polarized light in the second direction is converted into the linearly polarized light in the first direction after being reflected for N times between the brightness enhancement film and the reflector plate, and N=π/(4 × V × B × L), wherein L is a thickness of the magneto-optic dielectric film; V is a Verdet constant of the magneto-optic dielectric film; and B is magnetic intensity of the magnetic field parallel to the first direction and generated by the magnetic element.

3. The backlight module according to claim 1, wherein the magneto-optic dielectric film comprises a magneto-optic substance, and the magneto-optic substance comprises any one of YIG, YIG doped with GA, and a CdMgTe crystal.

4. The backlight module according to claim 3, wherein the magneto-optic dielectric film further comprises a transparent substrate, and the magneto-optic substance is arranged on the transparent substrate or layered within the transparent substrate.

5. The backlight module according to claim 4, wherein a material of the transparent substrate comprises any one of polymethyl methacrylate, polyethylene terephthalate, polycarbonate, and glass.

6. The backlight module according to claim 1, wherein the magnetic element is a planar magnet, and at least part of the backplane is made of a magnetic shielding material.

7. The backlight module according to claim 1, further comprising a lamp panel, wherein the lamp panel is arranged on one side of the magnetic element facing away from the backplane; the lamp panel comprises a circuit board and a plurality of light-emitting elements arrayed on the circuit board; the reflector plate is provided with open slots corresponding to the light-emitting elements; the magneto-optic dielectric film is located on one side of the reflector plate facing away from the magnetic element; and a support column is arranged between the reflector plate and the magneto-optic dielectric film.

8. The backlight module according to claim 1, further comprising a lamp panel and a support plate, wherein the lamp panel is arranged on one side of the magnetic element facing away from the backplane; the lamp panel comprises a circuit board and a plurality of light-emitting elements arrayed on the circuit board; the support plate is arranged between the magneto-optic dielectric film and the brightness enhancement film; the magneto-optic dielectric film is attached to the reflector plate; the magneto-optic dielectric film is flush with top surfaces of the light-emitting elements, and is provided with open slots corresponding to the light-emitting elements; and a support column is arranged between the reflector plate and the support plate.

9. The backlight module according to claim 8, wherein the lamp panel further comprises a transparent sealing layer covering the plurality of light-emitting elements; the magneto-optic dielectric film comprises a magneto-optic substance doped in the transparent sealing layer; and the magneto-optic substance comprises any one of YIG, YIG doped with GA, and a CdMgTe crystal.

10. The backlight module according to claim 8, wherein the support plate is an optical diffuser.

11. The backlight module according to claim 7 or 8, wherein the support column is an elastic column extending and retracting in an axial direction of the support column.

12. The backlight module according to claim 7 or 8, wherein each of the light-emitting elements is a micro light-emitting diode or a submillimeter light-emitting diode; the lamp panel further comprises a transparent sealing layer covering the light-emitting elements; and the magneto-optic dielectric film comprises a magneto-optic substance doped in the transparent sealing layer.

13. The backlight module according to claim 7 or 8, further comprising an optical control component, wherein the optical control component is located on sides of the light-emitting elements away from the backplane; and the optical control component comprises a diffusion plate and an optical film located on one side of the diffusion plate facing away from the backplane.

14. The backlight module according to claim 1, further comprising a light strip and a light guide plate, wherein the magneto-optic dielectric film is located on one side of the reflector plate facing away from the magnetic element, and the light guide plate is arranged between the reflector plate and the magneto-optic dielectric film; the light strip is arranged on a light entering side of the light guide plate; and the light strip comprises a circuit board and a plurality of light-emitting elements arranged in rows on the circuit board.

15. The backlight module according to claim 1, further comprising a light strip and a light guide plate, wherein the reflector plate is located on one side of the magneto-optic dielectric film facing away from the magnetic element, and the light guide plate is arranged between the reflector plate and the brightness enhancement film; the light strip is arranged on a light entering side of the light guide plate; and the light strip comprises a circuit board and a plurality of light-emitting elements arranged in rows on the circuit board.

16. The backlight module according to claim 14 or 15, further comprising an optical control component, wherein the optical control component is located on sides of the light-emitting elements away from the backplane; the optical control component comprises a lower diffusion film, a lower brightness enhancement film, an upper brightness enhancement film, and an upper diffusion film stacked from bottom to top; and at least one of the lower brightness enhancement film and the upper brightness enhancement film is provided with a prism structure on a light exiting surface.

17. The backlight module according to claim 14 or 15, wherein the backplane comprises a bottom plate and a bending portion; a U-shaped accommodating cavity is formed between the bottom plate and the bending portion; part of the light strip and part of the light guide plate are located in the U-shaped accommodating cavity;
the bending portion comprises a first support surface and a second support surface intersecting with each other; the light strip is located on the first support surface; and the second support surface is parallel to the bottom plate.

18. The backlight module according to claim 17, wherein a shading portion is arranged between the second support surface of the backplane and an array substrate of a liquid crystal display.

19. A display apparatus, comprising:
a liquid crystal display; and
a backlight module, arranged on a backlight side of the liquid crystal display, wherein the backlight module is used for supplying a light source to the liquid crystal display; the backlight module comprises a backplane and a reflector plate arranged on the backplane, wherein the backlight module further comprises a brightness enhancement film, a magneto-optic dielectric film, and a magnetic element; the magnetic element is located between the backplane and the reflector plate; the magneto-optic dielectric film is located between the magnetic element and the brightness enhancement film; the brightness enhancement film is used for allowing linearly polarized light in a first direction to pass and reflecting linearly polarized light in a second direction; the magnetic element is used for generating a magnetic field parallel to the first direction, so that the linearly polarized light in the second direction is caused to rotate in a polarization direction of the light after passing through the magneto-optic dielectric film located in the magnetic field; the reflector plate is used for reflecting the rotated linearly polarized light; the first direction is a light exiting direction of the backlight module; and the second direction is perpendicular to the first direction.

20. The display apparatus according to claim 19, further comprising an upper polarizer located on one side of a light exiting surface of the liquid crystal display, a lower polarizer located on one side of a backlight surface of the liquid crystal display, and a cover plate located on one side of the upper polarizer facing away from the liquid crystal display.
